# EUROPÄISCHE PATENTSCHRIFT

(11) **EP 0 667 051 B1**
(45) Veröffentlichungstag und Bekanntmachung des Hinweises auf die Patenterteilung: **21.08.1996**
(21) Anmeldenummer: 93920587.8
(22) Anmeldetag: 05.10.1993
(51) Int. Cl.: H02J 3/42

(54) **SYNCHRONISIERVORRICHTUNG**
SYNCHRONIZER
DISPOSITIF DE SYNCHRONISATION

(30) Priorität: 07.10.1992 AT 1974/92; 11.03.1993 AT 471/93
(43) Veröffentlichungstag der Anmeldung: 16.08.1995
(73) Patentinhaber: ELIN ENERGIEVERSORGUNG GESELLSCHAFT m.b.H., A-1141 Wien (AT)
(72) Erfinder: CECH, Michael, A-1110 Wien (AT)
(74) Vertreter: Krause, Peter
(86) Internationale Anmeldenummer: AT9300152
(87) Internationale Veröffentlichungsnummer: WO9408382

(56) Entgegenhaltungen:
- AT-B- 395 792
- US-A- 4 492 874
- IEEE TRANSACTIONS ON ENERGY CONVERSION Bd. 3, Nr. 4 , Dezember 1988 , NEW YORK Seiten 765 - 769 XP2680 YANG YI-HAN ET AL 'a fast following synchronizer of generators'

## Beschreibung

Die Erfindung betrifft eine Synchronisiervorrichtung zum Parallelschalten eines Synchrongenerators und eines Wechselstromnetzes mit je einer Meßschaltung für die Spannung und die Frequenz des Generators und des Wechselstromnetzes sowie den Phasenwinkel zwischen der Netz- und der Generatorspannung, mit Steuerausgängen für die Drehzahlregelung des Generatorantriebes zum Abgleich des Istwertes der Generatorfrequenz auf einen an die Netzfrequenz angepaßten Sollwertbereich einerseits und für eine Spannungsregelung des Generators zum Abgleich der Generatorspannung auf die Netzspannung andererseits und mit einer Schaltbefehlausgabe für den Generatorhauptschalter, der bei einem Soll-Istwertabgleich der Spannung und der Frequenz in Abhängigkeit von einem Soll-Istwertabgleich des Phasenwinkels mit einer durch einen Rechner aus der Frequenzdifferenz und der vorgebbaren Schaltzeit des Generatorhauptschalters ermittelten Sollwertvorgabe ansteuerbar ist.

Bis vor einigen Jahren war es üblich zwei Wechsel- bzw. Drehstromnetze mit dem Doppelspannungs- bzw. Differenzspannungsmesser, dem Doppelzunqenfrequenzmesser und dem umlaufenden Phasenwinkelmesser, welcher auch Synchronoskop genannt wird, synchronisiert. Der richtige und wiederkehrende Synchronisationszeitpunkt kann dabei am Phasenwinkelmesser abgelesen werden. Die wichtigste Voraussetzung zum Zusammenschalten von zwei Wechselstromnetzen oder einem Generator mit dem Drehstromnetz ist, daß zum Zeitpunkt der Zusammenschaltung die Zeitwerte der Spannungen übereinstimmen müssen. Das bedeutet, daß die Effektivwerte der Leiterspannungen, die Frequenzen, die Phasenlage und die Phasenfolge der Spannungen gleich sein müssen.

Die Generatorspannung genau auf die gleiche Frequenz wie das Wechselstromnetz zu trimmen ist fast unmöglich. Daher tritt eine Schwebung auf. Bei jedem Nulldurchgang der Schwebung bei dem die Zeitwerte der Spannungen übereinstimmen und welcher der Synchronisationszeitpunkt ist, können zwei Wechselstromnetze zusammengeschaltet bzw. ein Generator an das Wechselstromnetz geschaltet werden.

Bei der händischen Synchronisation kommt es auf das Geschick und die Erfahrung des Bedienungspersonals an, wie nahe beim idealen Synchronisationszeitpunkt ein Generator an das Wechselstromnetz geschaltet wird. Wenn die Synchronisation vollautomatisch erfolgt, also durch dauerndes Messen der Differenzspannung, der Differenzfrequenz und der Phasenverschiebung zwischen den beiden Spannungen, kann der Synchronisationszeitpunkt schon ziemlich exakt ermittelt werden. Dadurch, daß bei den bekannten Einrichtungen die einzelnen Messungen analog erfolgen, kann nicht optimal beim nächsten Synchronisationszeitpunkt eine Schalthandlung durchgeführt werden.

Um eine stabile und rasche Synchronisierung für einen Synchrongenerator mit einem beliebigen Generatorantrieb sicherzustellen, wird in der österr. Anmeldung öA 820/88, ausgelegt am 15. Juli 1992, eine Synchronisiereinrichtung vorgeschlagen, bei der eine Meßschaltung zum Bestimmen von Kennwerten für die Abhängigkeit des zeitlichen Drehzahlverlaufes des Generatorantriebes von einer Steuersignalbeaufschlagung seiner Drehzahlregelung und ein Speicher für diese Kennwerte vorgesehen sind. Ein Rechner kann sodann die für einen Frequenzabgleich erforderliche Steuersignalgröße für die gewünschte Drehzahländerung aus den gespeicherten Kennwerten errechnen. In dieser veröffentlichten Anmeldung wird die Meßschaltung nicht näher beschrieben. Weiters wird auch nicht darauf eingegangen, zu welchen Zeitpunkten diese Meßschaltung die Kennwerte im Speicher ablegt. Es wird nur in der Beschreibung erwähnt, daß die Abhängigkeit des zeitlichen Drehzahlverlaufes von einer Steuersignalbeaufschlagung der Drehzahlregelung über die Frequenzmessung erfaßt werden kann.

Die Aufgabe der Erfindung besteht nun darin, die eingangs erwähnte Synchronisiervorrichtung derart zu verbessern, daß für einen Stellbefehl an den Drehzahlregler des Generatorantriebes das Verhalten der Regelstrecke Generator und Generatorantrieb noch besser berücksichtigt wird.

Die Aufgabe wird durch die Erfindung gelöst. Diese ist im Anspruch definiert und unter anderem dadurch gekennzeichnet, daß während der Inbetriebsetzung des Generators die Ermittlung der optimalen Stellbefehle für den Drehzahlregler durch Versuche erfolgt, bei denen die Regelantwort auf den jeweiligen Stellbefehl für den Drehzahlregler des Generatorantriebes der Rechner erfaßt und in einem Speicher ablegt und der Rechner aus allen Regelantworten den für jede Soll-Istwertdifferenz der Spannung und der Frequenz optimalen Stellbefehl bzw. die optimale Befehlsdauer und Befehlspause für den Drehzahlregler ermittelt. Durch diese optimale Aufnahme der Regelcharakteristik von Generator und Generatorantrieb wird der Synchronisiervorgang rascher und vorallem schonender, d.h. mit den geringst möglichen Laststößen durchgeführt. Dies ist besonders dann notwendig, wenn der Generatorantrieb ein Dampfturbinensatz ist. Außerdem ist auch keine Meßschaltung erforderlich.

Von Vorteil ist, daß der Rechner die Ermittlung der optimalen Stellbefehle mittels eines Programmes selbsttätig durchführt. Dadurch wird höchstmögliche Genauigkeit erreicht.

Nach der Erfindung ist vorgesehen, daß nach durchgeführter Abgleichung der Frequenzdifferenz auf Null eine vom Rechner gesteuerte, phasenwinkelabhängige, überlagerte Frequenzverstellung die Ermittlung von optimalen Stellbefehlen für den Drehzahlregler des Generatorantriebes in bezug auf den Phasenwinkel der beiden zu synchronisierenden Systeme zueinander durch mehrmalige Wiederholung von jeweils zwei Schaltschritten erfolgt, bei denen jeweils nach Einstellung eines definierten Schlupfes und daraus resultierender Frequenzdifferenz zwischen Generator und Netz jeweils eine neuerliche Abgleichung der Frequenzdifferenz auf Null erfolgt und der Phasenwinkel schrittweise auf Null führbar ist. Dadurch ist es möglich eine Synchronisierung noch schonender durchzuführen.

Im Rahmen einer Ausgestaltung ist vorgesehen, daß der Rechner die Ermittlung der Stellbefehle für die Phasenwinkel-Abgleichung mittels eines Programmes selbsttätig durchführt. Durch den Einsatz eines Programmes ist es möglich, die erfindungsgemäße Einrichtung in eine vollautomatische Anlage einzubinden.

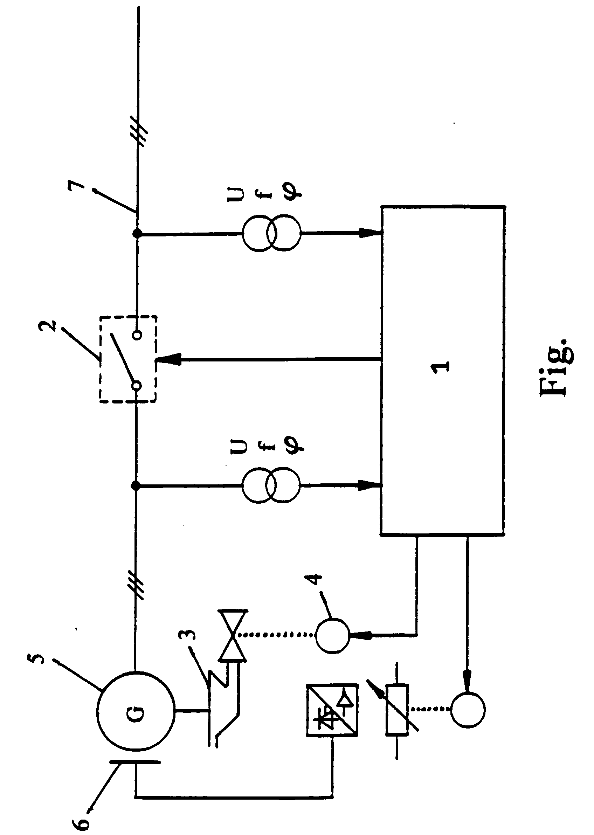

Die Erfindung wird anhand eines in der Zeichnung dargestellten Ausführungsbeispieles näher erläutert.

Die Fig. zeigt ein Netz 7, welchem über einen Generatorhauptschalter 2 ein Generator 5 zuschaltbar ist. Der Generatorantrieb 4, der mit der Welle des Generators 5 gekuppelt ist, kann beispielsweise eine Wasserkraftturbine oder ein Dampfturbinensatz sein. Einer Synchronisiereinrichtung 1, welche einen Digitalrechner beinhaltet, wird die Spannung U, die Frequenz f und die Phasenlage ϕ vor und nach dem Generatorhauptschalter 2 zugeführt. Die Synchronisiereinrichtung 1 ermittelt-daraus den Synchronisationszeitpunkt und gibt entsprechende Befehle an einen Regler 4 des Generatorantriebes 3. Das vor der Inbetriebnahme ermittelte Regelverhalten des Generatorantriebes 3 ist in der Synchronisiereinrichtung 1 gespeichert und wird mitberücksichtigt. Die Spannungsverstellung des Generators erfolgt über eine Eregung 6. Ein entsprechendes Stellsignal wird ebenfalls von der Synchronisiereinrichtung 1 bereitgestellt.

Handelt es sich bei den zu synchronisierenden Systemen um ein stabiles Netz 7 und einen Generator 5 mit einer genauen Drehzahlregelung 4, so wird mit der erfindungsgemäßen Synchronisiereinrichtung 1 die Frequenzdifferenz Δf innerhalb kurzer Zeit auf Null abgeglichen; der Phasenwinkel ϕ beharrt auf einem undefinierten Wert. In dieser Situation greift nun die phasenwinkelabhängige Frequenzverstellung ein und gibt ein winkelproportionales Verstellsignal ab. Dadurch wird ein definierter Schlupf in der Größenordnung zwischen 0,01 und 0,03 Hz eingestellt, womit sich der Phasenwinkel ϕ ändert. Ändert sich nun die Netzfrequenz f, so wird durch die überlagerte Frequenzverstellung die Frequenzdifferenz wieder auf Null ausgeregelt, und es greift wiederum die phasenwinkelabhängige Frequenzverstellung ein. Auf diese Weise wird der Phasenwinkel ϕ schrittweise auf Null geführt.

## Patentansprüche

1. Synchronisiervorrichtung (1) zum Parallelschalten eines Synchrongenerators (5) und eines Wechselstromnetzes (7) mit je einer Meßschaltung für die Spannung und die Frequenz des Generators und des Wechselstromnetzes sowie den Phasenwinkel zwischen der Netz- und der Generatorspannung, mit Steuerausgängen für die Drehzahlregelung des Generatorantriebes (3) zum Abgleich des Istwertes der Generatorfrequenz auf einen an die Netzfrequenz angepaßten Sollwertbereich einerseits und für eine Spannungsregelung des Generators zum Abgleich der Generatorspannung auf die Netzspannung andererseits und mit einer Schaltbefehlausgabe für den Generatorhauptschalter (2), der bei einem Soll-Istwertabgleich der Spannung und der Frequenz in Abhängigkeit von einem Soll-Istwertabgleich des Phasenwinkels mit einer durch einen Rechner aus der Frequenzdifferenz und der vorgebbaren Schaltzeit des Generatorhauptschalters (2) ermittelten Sollwertvorgabe ansteuerbar ist, **dadurch gekennzeichnet**, daß während der Inbetriebsetzung des Generators (5) die Ermittlung der optimalen Stellbefehle für den Drehzahlregler (4) durch Versuche erfolgt, bei denen die Regelantwort auf den jeweiligen Stellbefehl für den Drehzahlregler (4) des Generatorantriebes (3) der Rechner (1) erfaßt und in einem Speicher ablegt und der Rechner (1) aus allen Regelantworten den für jede Soll-Istwertdifferenz der Spannung und der Frequenz optimalen Stellbefehl bzw. die optimale Befehlsdauer und Befehlspause für den Drehzahlregler (5) ermittelt, und daß bei der Synchronisierung nach durchgeführter Abgleichung der Frequenzdifferenz auf Null eine vom Rechner (1) gesteuerte, phasenwinkelabhängige, überlagerte Frequenzverstellung die Ermittlung von optimalen Stellbefehlen für den Drehzahlregler (4) des Generatorantriebes (3) in bezug auf den Phasenwinkel der beiden zu synchronisierenden Systeme zueinander durch mehrmalige Wiederholung von jeweils zwei Schritten erfolgt, bei denen jeweils nach Einstellung eines definierten Schlupfes und daraus resultierender Frequenzdifferenz zwischen Generator (5) und Netz (7) jeweils eine neuerliche Abgleichung der Frequenzdifferenz auf Null erfolgt und der Phasenwinkel dadurch schrittweise auf Null führbar ist.

## Claims

1. A synchronizing device (1) adapted to parallel a synchronous alternator (5) and an A.C. network (7), each including a circuit for measuring the voltage and the frequency of both the alternator and the A.C. network, as well as the phase angle between the network voltage and the alternator voltage, comprising control outputs adapted to control the rotational speed of the alternator drive (3) with a view to adjusting the instant value of the alternator frequency within a set value range matching the network frequency on one hand, and adapted to control the alternator voltage with a view to adjusting the alternator voltage to the network one, on the other hand, and including a switching command output for the main alternator switch (2) which, should said voltage and frequency set value and instant value be equal, can be controlled depending on the fact that phase angle set value and instant value are equal, by allocating a predetermined set value by a computer based on the difference of frequency and predetermined switching time of the main alternator switch (2), characterized in that, when putting the alternator (5) into operation, the fixing of optimum adjustment commands for the rotational speed regulator (4) is carried out by tests wherein computer (1) notes the regulating response to each adjustment command provided for the rotational speed regulator (4) of the generator (3) drive, and stores it in a memory, and computer (1) determines for the rotational speed regulator (5), from all the regulating responses, the optimum adjustment command, indeed the optimum command duration and command pause between both set value and instant value of voltage and frequency, and in that, when synchronization is achieved, after the frequency difference is made equal to zero, a superimposed additional frequency shift is carried out which is pilot controlled by computer (1) and depends upon the phase angle, with a view to determining optimum adjustment commands for the rotational speed regulator (4) of generator (3) drive according to the phase angle of systems to be synchronized one another, by repeating two steps several times, for which, at the completion of the adjustment of a defined slippage and of the resulting frequency difference between alternator (5) and network (7), the frequency difference is made again equal to zero, thereby the phase angle can be brought to zero stepwise.

## Revendications

1. Dispositif de synchronisation (1) destiné à la mise en parallèle d'un alternateur synchrone (5) et d'un réseau de courant alternatif (7), comprenant chacun un circuit de mesure pour la tension et la fréquence de l'alternateur et du réseau de courant alternatif, ainsi que pour l'angle de déphasage entre la tension du réseau et la tension de l'alternateur, comportant des sorties de commande destinées à la régulation de la vitesse de rotation de l'entraînement d'alternateur (3) pour égaliser la valeur instantanée de la fréquence de l'alternateur à une plage de valeurs de consigne adaptée à la fréquence du réseau d'une part, et destinées à une régulation de tension de l'alternateur pour égaliser la tension de l'alternateur à la tension du réseau d'autre part, et comportant une sortie d'ordre de commutation pour le commutateur principal (2) de l'alternateur, qui, dans le cas d'une égalisation entre valeur de consigne et valeur instantanée de la tension et de la fréquence, peut être commandé en fonction d'une égalisation entre valeur de consigne et valeur instantanée de l'angle de déphasage, en allouant une valeur de consigne déterminée par un calculateur à partir de la différence de fréquence et du temps de commutation prédéterminé du commutateur principal (2) de l'alternateur, caractérisé en ce que durant la mise en service de l'alternateur (5), la détermination des ordres de réglage optimums pour le régulateur de vitesse de rotation (4) s'effectue par des essais, pour lesquels le calculateur (1) relève la réponse de régulation à chaque ordre de réglage considéré pour le régulateur de vitesse de rotation (4) de l'entraînement de générateur (3), et la stocke dans une mémoire, et le calculateur (1) détermine pour le régulateur de vitesse de rotation (5), à partir de toutes les réponses de régulation, l'ordre de réglage optimum, voire la durée d'ordre et la pause. d'ordre optimums pour chaque différence entre valeur de consigne et valeur instantanée de la tension et de la fréquence, et en ce que lors de la synchronisation, après avoir égalisé la différence de fréquence à zéro, on effectue un décalage de fréquence supplémentaire superposé, piloté par le calculateur (1) et fonction de l'angle de déphasage, pour la détermination d'ordres de réglage optimums pour le régulateur de vitesse de rotation (4) de l'entraînement de générateur (3) en fonction de l'angle de déphasage des systèmes à synchroniser l'un par rapport à l'autre, en répétant plusieurs fois deux pas, pour lesquels est effectué, à chaque fois après le réglage d'un glissement défini et de la différence de fréquence en résultant entre l'alternateur (5) et le réseau (7), une nouvelle égalisation de la différence de fréquence à zéro, l'angle de déphasage pouvant ainsi être amené pas à pas, à zéro.
